# EUROPÄISCHE PATENTANMELDUNG

(11) **EP 1 126 251 A2**
(43) Veröffentlichungstag der Anmeldung: **22.08.2001**
(21) Anmeldenummer: 00126925.7
(22) Anmeldetag: 08.12.2000
(51) Int. Cl.: G01F 23/284

(54) **Anordnung zur Füllstandsmessung**

(30) Priorität: 17.02.2000 US 506350
(71) Anmelder: Endress + Hauser GmbH + Co., 79689 Maulburg (DE)
(72) Erfinder: Biljon, Clive, van, Indianapolis, IN 46237 (US); McIntyre, Craig, Greenwood, IN 46142 (US); Hardell, Alexander, 79539 Lörrach (DE); Gerst, Peter, 79576 Weil am Rhein (DE)
(74) Vertreter: Andres, Angelika

(57) **Zusammenfassung**

Es ist eine Anordnung zur Füllstandsmessung vorgesehen, bei der während der Befüllung oder Entleerung eines Behälters eine zuverlässige Füllstandsmessung möglich ist, welche umfaßt: einen Behälter (1), in dem sich ein Füllgut (3) befindet, dessen Füllstand (5) zu messen ist, einem Bypass (7), der über ein oberhalb eines höchsten zu messenden Füllstands (13) angeordnetes oberes Querrohr (9) und ein unterhalb eines niedrigsten zu messenden Füllstands (15) angeordnetes unteres Querrohr (11) mit dem Behälter (1) verbunden ist, ein auf dem Bypass (7) oberhalb des oberen Querrohrs (9) angeordnetes mit Mikrowellen arbeitendes Füllstandsmeßgerät (21), und einen Mikrowellenleiter (25, 35), der im Betrieb Mikrowellen vom Füllstandsmeßgerät (21) in den Bypass (7) in einen Bereich unterhalb des obersten Querrohrs (9) hinein führt und der im Betrieb an einer Füllgutoberfläche reflektierte Mikrowellen zum Füllstandsmeßgerät (21) führt.

## Beschreibung

Die Erfindung betrifft eine Anordnung zur Füllstandsmessung bei der ein mit Mikrowellen arbeitendes Füllstandsmeßgerät auf einem Bypass angeordnet ist.

Bei der Füllstandsmessung werden Mikrowellen mittels einer Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgutoberfläche und der Antenne bestimmt.

In der industriellen Meßtechnik werden regelmäßig dielektrische Stabantennen und Hornantennen zum Senden und/oder Empfangen eingesetzt. Typischerweise wird ein Gehäuse verwendet, das einen Gehäuseabschnitt aufweist, der die Geometrie eines kurzgeschlossenen Hohlleiters besitzt. In dieses ist ein Erregerelement eingeführt, über das Mikrowellen durch den Gehäuseabschnitt hindurch gesendet und/oder empfangen werden. Bei einer Hornantenne schließt sich an das Gehäuse ein trichterförmiger in behälterzugewandter Richtung sich aufweitender das Horn bildender Abschnitt an. Im Fall der Stabantenne ist ein in den Behälter weisender Stab aus einem Dielektrikum vorgesehen.

Üblicherweise ist der Innenraum des Gehäuse von einem Einsatz aus einem Dielektrikum nahezu vollständig ausgefüllt. Im Fall der Hornantenne weist der Einsatz ein kegelförmiges in den Behälter weisendes Ende auf. Bei Stabantennen schließt sich an den Einsatz die stabförmige Antenne an.

Zur Bestimmung des Füllstandes können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgutoberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Mit Mikrowellen arbeitende Füllstandsmeßgeräte werden in sehr vielen Industriezweigen, z.B. in der Chemie oder in der Lebensmittelindustrie, eingesetzt. Typischerweise ist der Füllstand in einem Behälter zu messen. Beim Befüllen und Entleeren des Behälters können sich Wellen auf der Oberfläche ausbilden. Es ist daher bei einer Vielzahl von Anwendungen üblich einen sogenannten Bypass vorzusehen. Ein Bypass ist ein vertikales direkt neben dem Behälter angeordnetes, an einem unteren Ende verschlossenes Rohr. Das Rohr ist auf der Höhe des niedrigsten zu messenden Füllstands durch ein unteres Querrohr und auf der Höhe des höchsten zu messenden Füllstands oder darüber durch ein oberes Querrohr mit dem Behälterinnenraum verbunden. Der Füllstand im Inneren des Bypass folgt somit dem Füllstand im Behälter. Die Oberfläche des Füllguts ist im Bypass jedoch verglichen mit der Oberfläche des Füllguts im Behälter ruhig und glatt. Es kann also im Bypass eine sehr viel genauere Füllstandsmessung erfolgen als im Behälter. Hierzu wird ein Füllstandsmessgerät oben auf den Bypass montiert.

Der Bypass wirkt für die Mikrowellen wie ein Hohlleiter und das obere und jedes weitere nicht vom Füllgut überdeckte Querrohr stellt jeweils eine Quelle für Störsignale dar, die die Messung erheblich beeinträchtigen.

Störsignale entstehen z.B. indem ein Anteil der gesendeten Mikrowellenenergie direkt an einem oder in einem Querrohr reflektiert und anschließend von der Antenne empfangen wird. Neben der zur Füllstandsmessung genutzten Mikrowellenstrahlung, die von der Antenne direkt zum Füllgut gesendet und dort direkt zur Antenne reflektiert wird, gelangt also auch Störstrahlung, die den Umweg über mindestens eine Reflexion an einem Querrohr zurückgelegt hat, zur Antenne. Dies kann zu einer fehlerhaften Bestimmung der Laufzeit und damit zu fehlerhaften Meßergebnissen führen.

Unterschiedliche Mikrowellen-Mode breiten sich mit unterschiedlichen Ausbreitungsgeschwindigikeiten aus. Es wird daher zur Füllstandsmessung bevorzugt ein einziger Mikrowellen-Mode verwendet. Bei einem runden Hohlleiter ist dies z.B. der Transversal-Elektrische 11 Mode oder der Transversal-Elektrische 01 Mode. Es gelten geometriebedingt im Bereich eines Querrohrs andere Randbedingungen für die Ausbreitung von Mikrowellen als in den übrigen Bereichen des Bypasses. Aufgrund der geänderten Randbedingungen kann der Fall eintreten, daß zumindest ein Teil der gesendeten Mikrowellenstrahlung im Bereich eines Querrohrs eine Modenwandlung erfährt. Dieser Teil kann sich z.B. in Form einer erhöhten Störstrahlung bemerkbar machen und die nutzbare Signalleistung ist um diesen Teil reduziert.

Dieser Effekt ist besonders ausgeprägt, wenn sich ein Querrohr im Nahfeld der Antenne befindet. Im Nahfeld ist der gewünschte Mikrowellen-Mode noch nicht voll ausgebildet und daher besonders empfindlich gegenüber einer Änderung der Randbedingungen.

Es ist eine Aufgabe der Erfindung, eine Anordnung zur Füllstandsmessung anzugeben, bei der während einer Befüllung oder Entleerung des Behälters eine zuverlässige Füllstandsmessung möglich ist.

Hierzu besteht die Erfindung in einer Anordnung zur Füllstandsmessung welche umfaßt:
- einen Behälter,
   -- in dem sich ein Füllgut befindet,
      --- dessen Füllstand zu messen ist,
- einen Bypass,
   -- der über ein oberhalb eines höchsten zu messenden Füllstands angeordnetes oberes Querrohr und ein unterhalb eines niedrigsten zu messenden Füllstands angeordnetes unteres Querrohr mit dem Behälter verbunden ist,
- ein auf dem Bypass oberhalb des oberen Querrohrs angeordnetes mit Mikrowellen arbeitendes Füllstandsmeßgerät, und
- einen Mikrowellenleiter,
   -- der im Betrieb Mikrowellen vom Füllstandsmeßgerät in den Bypass in einen Bereich unterhalb des obersten Querrohrs hinein führt und
   -- der im Betrieb an einer Füllgutoberfläche reflektierte Mikrowellen zum Füllstandsmeßgerät führt.

Gemäß einer Weiterbildung der Erfindung ist der Mikrowellenleiter ein rohrförmiger Hohlleiter.

Gemäß einer anderen Weiterbildung weist das Füllstandsmeßgerät eine Hornantenne auf, die den Mikrowellenleiter bildet.

Gemäß einer Ausgestaltung der letztgenannten Weiterbildung ist zwischen dem Füllstandsmeßgerät und der Hornantenne ein rohrförmiges Verlängerungselement vorgesehen.

Gemäß einer Ausgestaltung weist der Mikrowellenleiter Entlüftungsöffnungen auf.

Ein Vorteil der Erfindung besteht darin, daß der Mikrowellenleiter jeweils das obere Querrohr überdeckt. Dadurch liegen im Nahbereich der Antenne definierte Randbedingungen vor unter denen sich der oder die angeregten Moden ungestört ausbilden.

Eine Reflexion von Mikrowellenstrahlung am oder im oberen Querrohr ist ausgeschlossen. Folglich steht praktisch die gesamte von der Antenne ausgesendete Mikrowellenleistung als Nutzsignal zur Füllstandsmessung zur Verfügung.

Die Erfindung und weitere Vorteile werden nun anhand der Figuren der Zeichnung, in denen vier Ausführungsbeispiele dargestellt sind, näher erläutert; gleiche Teile sind in den Figuren mit gleichen Bezugszeichen versehen.
- Fig. 1: zeigt eine Anordnung zur Füllstandsmessung mit einem in den Bypass eingeführten Hohlleiter, bei der das Füllstandsmeßgerät eine Stabantenne aufweist;
- Fig. 2: zeigt eine Anordnung zur Füllstandsmessung mit einem in den Bypass eingeführten Hohlleiter, bei der das Füllstandsmeßgerät eine Hornantenne aufweist;
- Fig. 3: zeigt eine Anordnung zur Füllstandsmessung bei der das Füllstandsmeßgerät eine Hornantenne aufweist, die sich in den Bypass hinein erstreckt; und
- Fig. 4: zeigt die Anordnung von Fig.3 wobei zwischen der Hornantenne und dem Füllstandsmeßgerät eine rohrförmige Verlängerung vorgesehen ist.

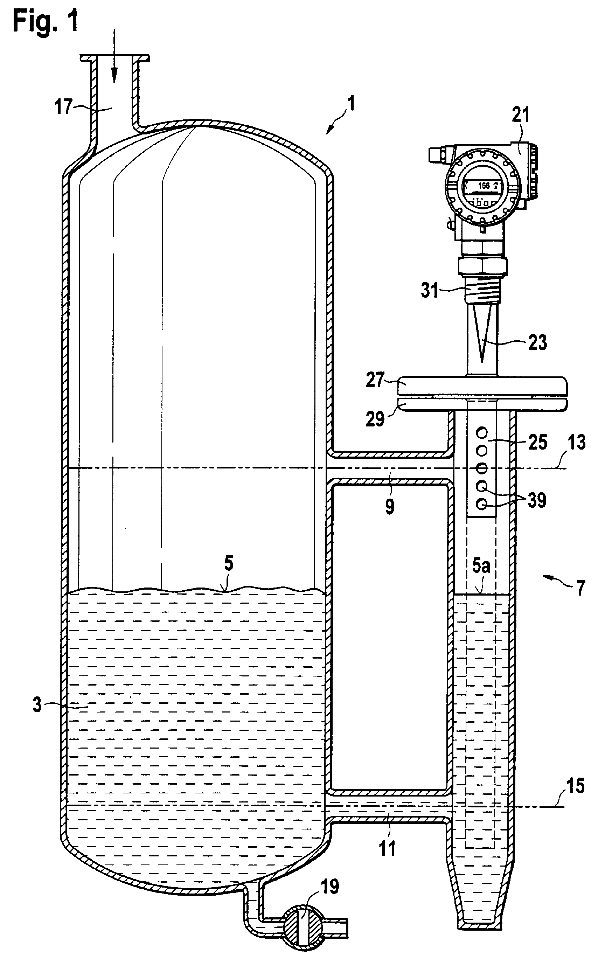

In Fig. 1 ist eine Anordnung zur Füllstandsmessung dargestellt. Die Anordnung umfaßt einen Behälter 1, in dem sich ein Füllgut 3 befindet. Es ist ein Füllstand 5 dieses Füllguts 3 zu messen. Neben dem Behälter 1 ist ein Bypass 7 angeordnet. Der Bypass 7 ist ein vertikal angeordnetes Rohr, das sich über die gesamte Füllhöhe des Behälters 1 erstreckt.

Der Behälter 1 ist mit dem Bypass 7 über ein oberes und ein unteres Querrohr 9, 11 verbunden. Das obere Querrohr 9 ist oberhalb eines höchsten zu messenden Füllstands 13 und das untere Querrohr 11 unterhalb eines niedrigsten zu messenden Füllstands 15 angeordnet. Wird der Behälter 1, z.B. durch eine Öffnung 17 im Behälterdeckel, befüllt steigt der Füllstand 5 im Behälter 1 an, wird Füllgut, z.B. durch ein Ablaßventil 19 am Behälterboden abgeführt, so sinkt der Füllstand 5 im Behälter 1. Während dieser Füllstandsänderungen ist die Füllgutoberfläche unruhig. Dies ist in Fig. 1 durch eine gewellte Linie dargestellt, die den aktuellen Füllstand 5 symbolisiert. Durch das untere Querrohr 11 wird jede Füllstandsänderung auf den Bypass 7 übertragen und über das obere Querrohr 9 erfolgt ein Druckausgleich zwischen Behälter 1 und Bypass 7. Entsprechend folgt ein Füllstand 5a im Bypass 7 exakt dem Füllstand 5 im Behälter 1. Da die Füllstandsänderung im Bypass 7 indirekt über das untere Querrohr 11 erfolgt ist die Füllgutoberfläche im Bypass 7 im Vergleich zu der Füllgutoberfläche im Behälter 1 sehr eben. Dies ist in Fig. 1 durch eine gerade Linie dargestellt, die den Füllstand 5a symbolisiert. Selbstverständlich können zwischen dem oberen und dem unteren Querrohr 9, 11 weitere Querrohre angeordnet sein.

Der Bypass 7 endet vorzugsweise deutlich unterhalb des niedrigsten zu messenden Füllstandes damit ein von einem niedrigen Füllstand herrührendes Echo sauber von einem vom Boden des Bypass 7 herrührenden Echo unterschieden werden kann.

Auf dem Bypass 7 ist oberhalb des oberen Querrohrs 9 ein mit Mikrowellen arbeitendes Füllstandsmeßgerät 21 angeordnet. Das Füllstandsmeßgerät 21 weist eine stabförmige Antenne 23 aus einem Dielektrikum, z.B. aus Polytetraflourethylen auf, und dient dazu den Füllstand 5a im Bypass 7 zu bestimmen.

Es ist ein Mikrowellenleiter vorgesehen, der im Betrieb Mikrowellen vom Füllstandsmeßgerät 21 in den Bypass 7 in einen Bereich unterhalb des obersten Querrohrs 9 hinein führt und der im Betrieb an der Füllgutoberfläche reflektierte Mikrowellen zum Füllstandsmeßgerät 21 zurück führt.

Bei dem in Fig. 1 dargestellten Ausführungsbeispiel ist der Mikrowellenleiter ein rohrförmiger Hohlleiter 25, der von oben in den Bypass 7 eingeführt ist. Er weist einen Flansch 27 auf mit dem er auf einen an einem oberen Ende des Bypass 7 angeordneten Gegenflansch 29 befestigt ist. Das Füllstandsmeßgerät 21 weist ein Außengewinde 31 auf mit dem es in ein oberes aus dem Bypass 7 herausragendes Ende des Hohlleiters 25 eingeschraubt ist.

Bei dem in Fig. 1 dargestellten Ausführungsbeispiel endet der Mikrowellenleiter kurz unterhalb des oberen Querrohrs 9. Um einen an einem unteren Ende des Hohlleiters 25 zwangsläufig auftretenden Impedanzsprung zu vermeiden kann sich der Mikrowellenleiter auch bis unterhalb des niedrigsten zu messenden Füllstands 15 erstrecken. Dies ist in Fig. 1 durch eine gestrichelte Linie angedeutet.

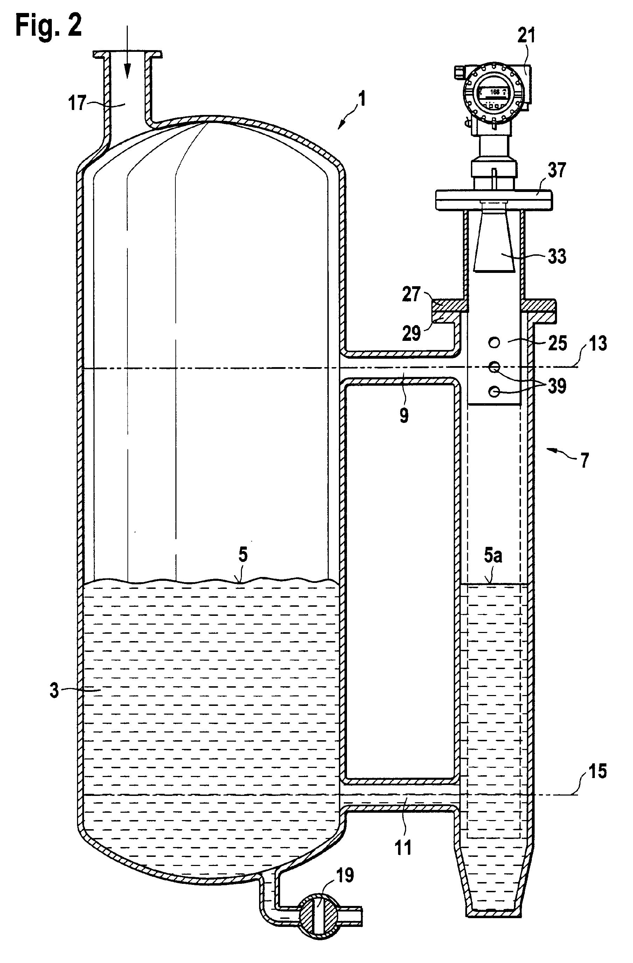

Die Figuren 2 bis 4 zeigen weitere Ausführungsbeispiele einer Anordnung zur Füllstandsmessung. Da der prinzipielle Aufbau bei allen Ausführungsbeispielen identisch ist werden nachfolgend lediglich die Unterschiede gegenüber dem in Fig. 1 dargestellten Ausführungsbeispiel näher erläutert.

Bei dem in Fig. 2 dargestellten Ausführungsbeispiel weist das Füllstandsmeßgerät 21 eine Hornantenne 33 auf. Der Mikrowellenleiter ist auch hier ein rohrförmiger Hohlleiter 25. Dieser weist an dessen oberen Ende einen Flansch 35 auf, auf dem das Füllstandsmeßgerät 21 derart befestigt ist, daß sich die Hornantenne 33 innerhalb des Hohlleiters 25 befindet.

Bei den Ausführungsbeispielen von Fig. 1 und Fig. 2 kann als rohrförmiger Hohlleiter 25 ein handelsübliches Schwallrohr verwendet werden. Schwallrohre sind rohrförmige Elemente die in der Füllstandsmeßtechnik verwendet werden, um den Füllstand in Behältern mit einer unruhigen bzw. unebenen Füllgutoberfläche zu messen. Dabei wird das Schwallrohr durch eine Öffnung von oben direkt in den Behälter eingeführt und oben auf das Schwallrohr wird das Füllstandsmeßgerät aufgesetzt. Bei der erfindungsgemäßen Verwendung eines Schwallrohrs wird dieses nicht wie üblich in den Behälter sondern in den Bypass eingesetzt.

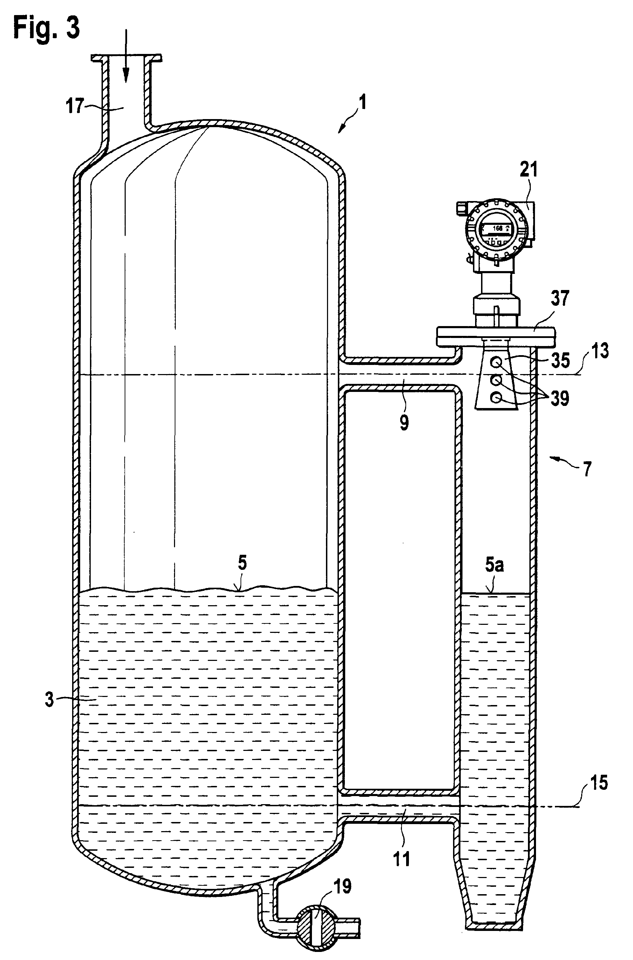

Bei dem in Fig. 3 dargestellten Ausführungsbeispiel weist das Füllstandsmeßgerät 21 ebenfalls eine Hornantenne 35 auf. Das Füllstandsmeßgerät 21 ist mittels einer Flanschverbindung 37 direkt auf dem Bypass 7 montiert und die Hornantenne 35 ragt in den Bypass 7 hinein. Sie erstreckt sich bis in einen Bereich unterhalb des oberen Querrohrs 9 und bildet somit einen Mikrowellenleiter, der im Betrieb Mikrowellen vom Füllstandsmeßgerät 21 in den Bypass 7 in einen Bereich unterhalb des obersten Querrohrs 9 hinein führt und der im Betrieb an der Füllgutoberfläche reflektierte Mikrowellen zum Füllstandsmeßgerät 21 zurück führt.

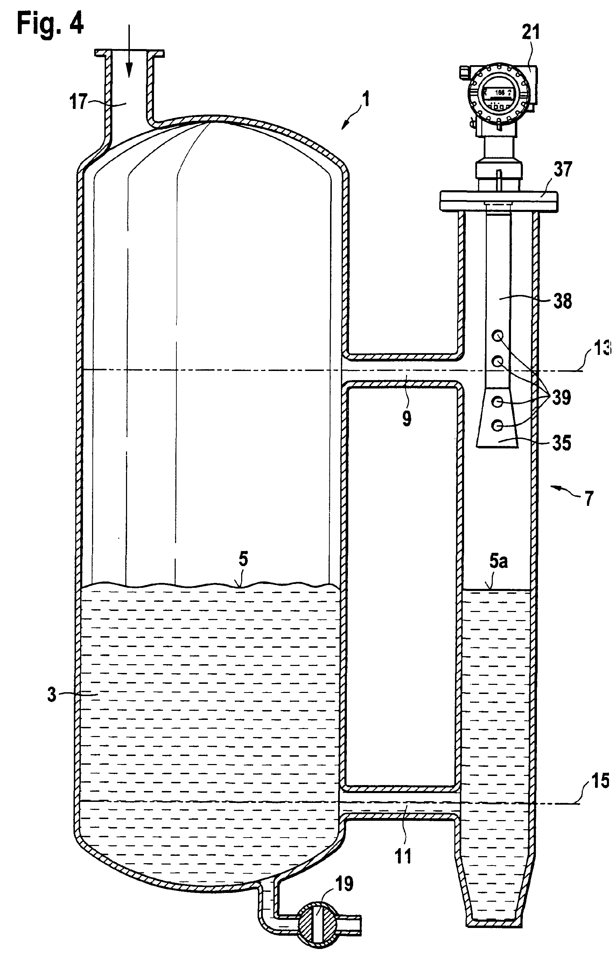

Sollte das obere Querrohr 9 sehr weit unterhalb des oberen Endes des Bypasses 7 angeordnet sein kann, wie in Fig. 4 dargestellt, zwischen dem Füllstandsmeßgerät 21 und der Hornantenne 35 ein rohrförmiges Verlängerungselement 38 vorgesehen sein.

Bei allen dargestellten Ausführungsbeispielen sind in den jeweiligen Mikrowellenleitern Entlüftungsöffnungen 39 vorgesehen, durch die bei einer Änderung des Füllstands 5a im Bypass 7 Luft oder Gas aus dem Mikrowellenleiter entweichen bzw. in diesen eindringen kann. Durch die Entlüftungsöffnungen erfolgt ein Druckausgleich. Damit ist sichergestellt, daß innerhalb und außerhalb des Mikrowellenleiters der gleiche Füllstand vorliegt. Entlüftungsöffnungen 39 sind z.B. erforderlich, wenn aufgrund der räumlichen Gegebenheiten der Meßanordnung Füllgut in den Mikrowellenleiter aufsteigen kann und/oder um die Be- und Entlüftung über das obere Querrohr 9 sicherzustellen, wenn der Lüftungsweg durch den Mikrowellenleiter versperrt ist.

## Patentansprüche

1. Anordnung zur Füllstandsmessung welche umfaßt:
- einen Behälter (1),
-- in dem sich ein Füllgut (3) befindet,
--- dessen Füllstand (5) zu messen ist,
- einem Bypass (7),
-- der über ein oberhalb eines höchsten zu messenden Füllstands (13) angeordnetes oberes Querrohr (9) und ein unterhalb eines niedrigsten zu messenden Füllstands (15) angeordnetes unteres Querrohr (11) mit dem Behälter (1) verbunden ist,
- ein auf dem Bypass (7) oberhalb des oberen Querrohrs (9) angeordnetes mit Mikrowellen arbeitendes Füllstandsmeßgerät (21), und
- einen Mikrowellenleiter (25, 35),
-- der im Betrieb Mikrowellen vom Füllstandsmeßgerät (21) in den Bypass (7) in einen Bereich unterhalb des obersten Querrohrs (9) hinein führt und
-- der im Betrieb an einer Füllgutoberfläche reflektierte Mikrowellen zum Füllstandsmeßgerät (21) führt.

2. Anordnung zur Füllstandsmessung nach Anspruch 1, bei der der Mikrowellenleiter ein rohrförmiger Hohlleiter (25) ist.

3. Anordnung zur Füllstandsmessung nach Anspruch 1, bei der das Füllstandsmeßgerät eine Hornantenne (35) aufweist und bei dem die Hornantenne (35) den Mikrowellenleiter bildet.

4. Anordnung zur Füllstandsmessung nach Anspruch 3, bei dem zwischen dem Füllstandsmeßgerät (21) und der Hornantenne (35) ein rohrförmiges Verlängerungselement (38) vorgesehen ist.

5. Anordnung zur Füllstandsmessung nach einem der vorherigen Ansprüche, bei dem der Mikrowellenleiter (25, 35) Entlüftungsöffnungen (39) aufweist.
